# EUROPÄISCHE PATENTSCHRIFT

(11) **EP 1 240 235 B1**
(45) Veröffentlichungstag und Bekanntmachung des Hinweises auf die Patenterteilung: **06.04.2005**
(21) Anmeldenummer: 00976018.2
(22) Anmeldetag: 09.11.2000
(51) Int. Cl.: C08G 65/26, B01J 27/26

(54) **VERFAHREN ZUR HERSTELLUNG VON POLYETHERPOLYOLEN**
METHOD FOR PRODUCING POLYETHER POLYOLS
PROCEDE DE FABRICATION DE POLYETHER POLYOLS

(30) Priorität: 22.11.1999 DE 19956119
(43) Veröffentlichungstag der Anmeldung: 18.09.2002
(73) Patentinhaber: Bayer MaterialScience AG, 51368 Leverkusen (DE)
(72) Erfinder: EHLERS, Stephan, 50937 Köln (DE); HOFMANN, Jörg, 47829 Krefeld (DE); DIETRICH, Manfred, 60599 Frankfurt (DE); GUPTA, Pramod, 50181 Bedburg (DE); STEINLEIN, Christian, 40882 Ratingen (DE); MÜLLER, Hanns-Peter, 51519 Odenthal (DE); BETZ, Werner, 51519 Odenthal (DE); MÜNNIG, Jürgen, 41564 Kaarst (DE)
(86) Internationale Anmeldenummer: PCT/EP2000/011089
(87) Internationale Veröffentlichungsnummer: WO 2001/038420

(56) Entgegenhaltungen:
- EP-A- 0 654 302
- WO-A-00/47650
- WO-A-97/29146
- WO-A-98/52689
- DD-A- 203 734
- GB-A- 1 146 660
- US-A- 4 477 589

## Beschreibung

Die Erfindung betrifft ein verbessertes Verfahren zur Herstellung von Polyetherpolyolen mittels Doppelmetallcyanid(DMC)-Katalyse durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind seit langem bekannt (siehe beispielsweise US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Metallhydroxid-Katalysatoren. Die so erhaltenen Polyetherpolyole können zu hochwertigen Polyurethanen (z.B. Elastomere, Schäume, Beschichtungen) verarbeitet werden.

Generelles Merkmal bei der DMC-katalysierten Herstellung von Polyetherpolyolen ist das Auftreten einer Induktionsperiode, d.h. der DMC-Katalysator muss zunächst durch eine gewisse Mindestmenge an Alkylenoxid aktiviert werden, bevor eine kontinuierliche Alkylenoxid-Dosierung zum Polyether-Kettenaufbau erfolgen kann (siehe z.B. J. L. Schuchardt, S. D. Harper, 32^{nd} Annual Polyurethane Technical Marketing Conference, 1989, S. 360ff.). Die Induktionszeiten liegen typischerweise zwischen mehreren Minuten und einigen Stunden und sind abhängig von Reaktionsparametem wie Katalysatorkonzentration, Molmasse des eingesetzten Starters, Reaktionstemperatur und Alkylenoxidmenge bei der Aktivierung.

In DE-OS 15 95 759 wird ein Verfahren zur Herstellung von Polyetherpolyolen mittels DMC-Katalyse beschrieben, bei dem durch Polyaddition eines Epoxids in Gegenwart eines DMC-Katalysators. eines mit dem Epoxid reaktionsfähigen Telogens mit einem mittleren Molekulargewicht von mindestens 300 g/mol und eines mit dem Epoxid reaktionsfähigen Telogens mit einem mittleren Molekulargewicht von mindestens 31 g/mol ein Polyetherpolyol hergestellt wird. Nach der Aktivierung des Gemisches, d.h. nach dem Ende der Induktionsperiode wird das Epoxid weiter bis zur gewünschten OH-Zahl des Polyethers dosiert. Nachteilig bei diesem Verfahren ist, dass die gesamte Menge des Starters vollständig vorgelegt und deshalb eine hohe Katalysatorkonzentration benötigt wird, da die Katalysatoraktivität durch den vorgelegten kurzkettigen Starter stark reduziert wird. Dies verursacht einerseits hohe Materialkosten aufgrund der großen einzusetzenden Katalysatormengen. Weiterhin ist eine Abtrennung des Katalysators nach der Alkoxylierung notwendig, wodurch weiterer Aufwand und Kosten entstehen. Darüber hinaus muss der Katalysator vor der eigentlichen Alkoxylierung zunächst aktiviert werden. Das Auftreten einer solchen Induktionsphase bedeutet jedoch zum einen eine Verschlechterung der Raum/Zeit-Ausbeute und zum anderen resultiert ein erhöhtes Risikopotential aus der im Reaktor zur Aktivierung eingesetzten Menge an freiem Alkylenoxid.

In DDR-WP 203 734 wird ein Verfahren zur DMC-katalysierten Polyetherpolyol-Herstellung offenbart, bei dem der DMC-Katalysator zunächst alleine im Reaktor vorgelegt und mit reinem Propylenoxid aktiviert wird. Die Reaktionstemperatur steigt während der Aktivierung durch die Exothermie der Reaktion von Raumtemperatur auf 80°C. Nach vollständiger Aktivierung (Ende der Induktionsperiode) erfolgt die gleichzeitige Dosierung von Epoxid und Starter. Die Reaktionstemperatur liegt dabei im Bereich von 20°C - 140°C. Auf diese Weise können lebende Prepolymere hergestellt werden, die gemäß DDR-WP 203 735 anschließend in einem kontinuierlichen Verfahren bei einer Temperatur im Bereich von 40°C - 120°C mit Propylenoxid weiter verlängert werden können. Das in DDR-WP 203 734 beschriebene Verfahren weist jedoch mehrere Nachteile auf. Zum einen erfolgt die Aktivierung des Katalysators mit großen Mengen an reinem Propylenoxid. Reines Propylenoxid besitzt ein extrem hohes Gefahrenpotential, da während eines Kühlungsausfalls die durch die Exothermie der Propoxylierungreaktion freigesetzte Wärme nicht durch eine weitere Komponente, z.B. einen Starter, aufgenommen und verteilt werden kann. Die dadurch auftretende starke lokale Erwärmung kann zur explosionsartigen thermischen Zersetzung der gebildeten Polyether führen. Aber auch bei vollständiger Funktionsfähigkeit des Heiz-Kühl-Kreislaufes kann es zu lokalen Erwärmungen kommen. Aufgrund der geringen Füllmenge im Reaktor steht nur eine sehr kleine Wärmeaustauschfläche zur Verfügung, so dass eine wirkliche Kontrolle der Reaktionstemperatur sehr schwierig oder gar nicht möglich ist, wodurch eine thermisch induzierte Alterung und Deaktivierung des Katalysators nicht ausgeschlossen werden kann. Darüber hinaus werden bei diesem Verfahren durch die hohen zur Katalysatoraktivierung eingesetzten Propylenoxidmengen sehr hochmolekulare Ketten gebildet, die zu einer breiten Molmassenverteilung und zu einem deutlichen Viskositätsanstieg des Polyetherpolyols führen, was den Einsatz solcher Produkte für Polyurethan-Anwendungen deutlich einschränkt.

In EP-A 879 259 wird ein Verfahren offenbart, bei dem das Alkylenoxid und der Starter ebenfalls gleichzeitig dosiert werden. Der DMC-Katalysator wird zuvor im Reaktor vorgelegt. Optional kann dabei zusätzlich ein Polyetherpolyol im Reaktor hinzugegeben werden. Auch dieses Verfahren weist als Nachteil das Auftreten einer Induktionsphase auf. Diese wird durch die gleichzeitige Dosierung von Epoxid und Starter während der Aktivierung oder durch den vorgelegten Starter verursacht, da der Starter, selbst in sehr geringer Konzentration, vermutlich zunächst eine temporäre Deaktivierung des Katalysators bewirkt. Dieses Phänomen wird z.B. auch in WO 98/52689 beschrieben. Dort wird durch das Entfernen von Wasserresten aus vorpropoxylierten Startern eine Aktivitätssteigerung des DMC-Katalysators erreicht. Wasser kann ebenfalls als niedermolekularer Starter aufgefasst werden, so dass schon geringe Spuren eines niedermolekularen Starters zu einer deutlichen Aktivitätsreduktion des DMC-Katalysators und somit zu einer Verlängerung der Induktionsphase führen. Erst nach der vollständigen Aktivierung des Katalysators, die durch einen beschleunigten Druckabfall im Reaktor gekennzeichnet ist, kann die Dosierung des Epoxid-Starter-Gemisches fortgesetzt werden. Da die Dosierung des Epoxid-Starters-Gemisches entsprechend dem Konzentrationsverhältnis im gewünschten Polyetherpolyol erfolgt, ergibt sich während der Induktionsphase i.a. eine sehr hohe Konzentration an freiem Propylenoxid im Reaktor, so dass dieses Verfahren ein relativ hohes sicherheitstechnisches Risiko beinhaltet.

In der Deutschen Patentanmeldung 19937114.8 wird ein Verfahren offengelegt, bei dem ein DMC-Katalysator in einem Starter vorgelegt und die zur Aktivierung des Katalysators notwendige Alkylenoxid-Konzentration während der Induktionsphase konstant gehalten wird. Auch bei diesem Verfahren muss zunächst der Katalysator aktiviert werden, bevor die eigentliche Propoxylierung erfolgen kann.

Aufgabe der vorliegenden Erfindung war daher die Entwicklung eines Verfahrens zur DMC-katalysierten Herstellung von Polyetherpolyolen, das eine deutlich reduzierte bzw. keine Induktionsphase aufweist (somit ein deutlich verringertes Gefahrenpotential durch freies Alkylenoxid beinhaltet) und zu Polyetherpolyolen mit enger Molmassenverteilung und niedriger Viskosität führt.

Es wurde nun gefunden, dass Polyetherpolyole durch DMC-Katalyse mit deutlich reduzierter Induktionsperiode bzw. sogar ohne Induktionsperiode hergestellt werden können, wenn der DMC-Katalysator in einem inerten Suspensionsmittel vorgelegt, und mit reinem Alkylenoxid aktiviert wird und anschließend das Polyetherpolyol durch Dosierung eines Starter/Alkylenoxid-Gemisches aufgebaut wird. Durch dieses Verfahren werden Polyetherpolyole mit enger Molmassenverteilung und niedriger Viskosität erhalten.

Gegenstand der vorliegenden Erfindung ist daher ein Verfahren zur Herstellung von Polyetherpolyolen durch Polyaddition von Alkylenoxiden an aktive Wasserstoff atome aufweisende Starterverbindungen mittels DMC-Katalyse, bei dem der DMC-Katalysator in einem inerten Suspensionsmittel vorgelegt, mit 1-30 Gew.-% Alkylenoxid, bezogen auf die Gesamtmenge an Suspensionsmittel und Alkylenoxid, bei Temperaturen zwischen 20°C und 200°C aktiviert wird und anschließend durch Dosierung eines Starter/Alkylenoxid-Gemisches das Polyetherpolyol aufgebaut wird.

Bei dem erfindungsgemäßen Verfahren wird zunächst ein Suspensionsmittel, das nicht mit dem Alkylenoxid reagiert, im Reaktor vorgelegt. Anschließend wird die für die Polyaddition benötigte Menge an nicht aktiviertem DMC-Katalysator in den Reaktor gegeben. Die Reihenfolge der Zugabe ist dabei nicht entscheidend. Es kann auch erst der Katalysator in dem inerten Suspensionsmittel suspendiert und die Suspension anschließend in den Reaktor gefüllt werden. Durch das Suspensionsmittel wird eine ausreichende Wärmeaustauschfläche im Reaktor zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Als Suspensionsmittel sind alle polar-aprotischen, schwach polar-aprotischen und unpolar-aprotischen Lösungsmittel geeignet, die unter den im folgenden beschriebenen Bedingungen nicht mit den für die Polyaddition verwendeten Alkylenoxiden reagieren. Beispielhaft seien an dieser Stelle folgende polar-aprotischen Lösungsmittel genannt: Aceton, Methylethylketon, Acetonitril, Nitromethan, Dimethylsulfoxid, Sulfolan, Dimethylformamid, Dimethylacetamid und N-Methylpyrrolidon. Bevorzugt werden aber unpolar- und schwach polar-aprotische Lösungsmittel eingesetzt. Zu dieser Gruppe zählen z.B. Ether, wie z.B. Dioxan, Diethylether, Methyl-tert.-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Besonders bevorzugt sind Toluol, Xylol, Ethylbenzol, Chlorbenzol und Dichlorbenzol.

Die für das erfindungsgemäße Verfahren geeigneten DMC-Katalysatoren sind im Prinzip bekannt und beispielsweise ausführlich beschrieben in JP-A 4 145 123, EP-A 654 302, EP-A 700 949, EP-A 743 093, EP-A 761 708, WO 97/40086, WO 98/16310, WO 99/19062, WO 99/19063, WO 99/33562, WO 99/46042 und den Deutschen Patentanmeldungen 19834572.0, 198 34 573.9, 198 42 382.9, 198 42 383.7, 199 05 611.0, 199 06 985.9, 199 13 260.7, 199 20 937.5, 199 24 672.6. Ein typisches Beispiel sind die in der Deutschen Patentanmeldung 199 05 611.0 beschriebenen DMC-Katalysatoren, die neben einer Doppelmetallcyanid-Verbindung (z.B. Zinkhexacyanocobaltat(III)) und einem organischen Komplexliganden (z.B. tert.-Butanol) noch eine Gallensäure oder deren Salze, Ester oder Amide enthalten.

Die DMC-Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,01 Gew.-%, bezogen auf die Menge des herzustellenden Polyetherpolyols.

Die DMC-Katalysatorsuspension wird nach der Zugabe in den Reaktor auf die zur Aktivierung notwendige Temperatur gebracht. Die Aktivierung kann im Bereich von 20°C - 200°C, bevorzugt im Bereich von 60°C - 180°C, besonders bevorzugt im Bereich von 120°C - 160°C durchgerührt werden.

Als Alkylenoxide zur Aktivierung des DMC-Katalysators kommen bevorzugt Ethylenoxid, Propylenoxid, Butylenoxid, Styroloxid sowie deren Mischungen zum Einsatz. Besonders bevorzugt wird die Aktivierung mit Propylenoxid oder einer Mischung aus Propylenoxid und Ethylenoxid durchgeführt.

Die Aktivierung des DMC-Katalysators kann bei einem Reaktordruck im Bereich von 0,0001 - 20 bar, bevorzugt im Bereich von 0,5 - 10 bar, besonders bevorzugt im Bereich von 1 - 6 bar erfolgen.

Erfindungsgemäß liegt die Menge an Alkylenoxid zur Aktivierung des DMC-Katalysators bei 1-30 Gew.-%, bevorzugt bei 2-25 Gew.-%, besonders bevorzugt bei 3-15 Gew.-%, jeweils bezogen auf die Gesamtmenge an Suspensionsmittel und Alkylenoxid.

Durch diese Form der Katalysatoraktivierung werden die Induktionszeiten im Vergleich zu den Verfahren des Standes der Technik deutlich reduziert. Bevorzugt werden die Reaktionsbedingungen so gewählt, dass keine Induktionsperiode mehr auftritt. Dies ist im allgemeinen dann der Fall, wenn die Temperatur bei der Katalysatoraktivierung mindestens 120°C beträgt. Der Reaktordruck fällt unmittelbar nach der Zugabe des Alkylenoxids ab, da im Gegensatz zu den Verfahren des Stands der Technik bei dem erfindungsgemäßen Verfahren keine Induktionsphase beobachtet wird. Die Dosierung des Alkylenoxids muss zu keinem Zeitpunkt der Reaktion unterbrochen werden und die Konzentration an freiem Alkylenoxid im Reaktor ist zu jedem Zeitpunkt der Reaktion sehr klein, was einen großen sicherheitstechnischen Vorteil darstellt. Das erfindungsgemäße Verfahren ermöglicht es daher, dass unmittelbar nach dem Beginn der Alkylenoxidzugabe auch mit der Zudosierung des Starters zum Aufbau des Polyetherpolyols begonnen werden kann. Daraus ergibt sich eine verbesserte Raum/ Zeit-Ausbeute bei gleichzeitig erhöhter Sicherheit während der Reaktion.

Der Aufbau des Polyetherpolyols durch Polyaddition erfolgt erfindungsgemäß durch Dosierung eines Starter/Alkylenoxid-Gemisches. Das Molverhältnis Starter/Alkylenoxid beträgt dabei 1:1 bis 1:1000, bevorzugt 1:2 bis 1:500, besonders bevorzugt 1:3 bis 1:200.

Als Alkylenoxide zum Aufbau des Polyetherpolyols kommen bevorzugt Ethylenoxid, Propylenoxid, Butylenoxid sowie deren Mischungen zum Einsatz. Besonders bevorzugt eingesetzt wird Propylenoxid und Mischungen aus Propylenoxid und Ethylenoxid. Der Aufbau der Polyetherketten kann z.B. nur mit einem monomeren Epoxid durchgeführt werden oder auch statistisch mit 2 oder 3 unterschiedlichen monomeren Epoxiden erfolgen. Näheres ist "Ullmanns Encyclopädie der industriellen Chemie", Band A21, 1992, S. 670f. zu entnehmen.

Als Starterverbindungen mit aktiven Wasserstoffatomen werden vorzugsweise Verbindungen mit Molekulargewichten von 18 bis 2.000 g/mol, bevorzugt 62 bis 1.000 g/mol und 1 bis 8, bevorzugt 2 bis 6 Hydroxylgruppen eingesetzt. Beispielhaft genannt seien Butanol, Ethylenglykol, Diethylenglykol, Triethylenglykol, 1,2-Propylenglykol, 1,4-Butandiol, 1,6-Hexandiol, Bisphenol-A, Trimethylolpropan, Glycerin, Pentaerythrit, Sorbit, Rohrzucker, abgebaute Stärke, Wasser oder sog. vorverlängerte Starter, die aus den zuvor genannten Verbindungen durch Alkoxylierung erhalten wurden.

Die Polyaddition kann bei einem Reaktordruck im Bereich von 0,0001 - 20 bar, bevorzugt im Bereich von 0,5 - 10 bar, besonders bevorzugt im Bereich von 1 - 6 bar erfolgen. Die Reaktionstemperaturen liegen im Bereich von 0 - 200°C, bevorzugt im Bereich von 60 - 180°C, besonders bevorzugt im Bereich von 80 - 160°C.

Die Zudosierung des Gemisches aus Alkylenoxid und Starter zum Aufbau des Polyetherpolyols in den Reaktor kann über eine Leitung, in der optional statische Mischelemente eingebaut sein können, um eine homogenere Vermischung von Alkylenoxid und Starter zu erreichen, oder über getrennte Dosierstrecken erfolgen. Wichtig ist jedoch, dass zu jedem Zeitpunkt der Reaktion eine gute Durchmischung der Edukte gewährleistet ist. Ein erhöhter Segregationsgrad im Reaktor, d.h. bei schlechter Durchmischung der Edukte mit dem Reaktorinhalt, kann aufgrund einer lokal erhöhten Konzentration an Starter eine vollständige oder teilweise Deaktivierung des DMC-Katalysators verursachen.

Die Molekulargewichte der nach dem erfindungsgemäßen Verfahren hergestellten Polyetherpolyole liegen im Bereich von 400 bis 100.000 g/mol, bevorzugt im Bereich von 700 bis 50.000 g/mol, besonders bevorzugt im Bereich von 1.000 bis 20.000 g/mol.

Der Aufbau der Polyetherpolyole durch Polyaddition kann vollständig durch Dosierung eines Starter/Alkylenoxid-Gemisches erfolgen. Es ist aber auch möglich, zunächst nur einen Teil des herzustellenden Polyetherpolyols durch Dosierung eines Starter/Alkylenoxid-Gemisches aufzubauen und anschließend das hierbei erhaltene Zwischenprodukt mit reinem Alkylenoxid, bevorzugt Propylenoxid, oder einem Alkylenoxid-Gemisch, bevorzugt einem Gemisch aus Propylenoxid und Ethylenoxid, weiterzuverlängem. Hierbei können auch mehrere dieser Blöcke aus Alkylenoxid bzw. Alkylenoxid-Gemisch gebildet werden, z.B. kann auf ein Zwischenprodukt, das durch Dosierung eines Starter/Propylenoxid-Gemisches hergestellt wurde, zum Aufbau des fertigen Polyetherpolyols zunächst ein Gemisch aus Propylenoxid und Ethylenoxid dosiert werden und anschließend reines Propylenoxid dosiert werden. Auf diese Weise können Polyetherpolyole mit mehreren definierten Blöcken (sog. Multiblockcopolymere) aufgebaut werden.

Durch das erfindungsgemäße Verfahren lassen sich selbst bei Reaktionstemperaturen von 145°C und höher Polyetherpolyole mit sehr niedrigem Doppelbindungsgehalt (≤ 6 mMol/kg) herstellen, was mit keinem der bisher bekannten DMC-katalysierten Polyadditionsverfahren möglich ist. Die durch das erfindungsgemäße Verfahren hergestellten Polyetherpolyole besitzen enge Molmassenverteilungen und niedrige Viskositäten.

### Beispiele

### Beispiel 1

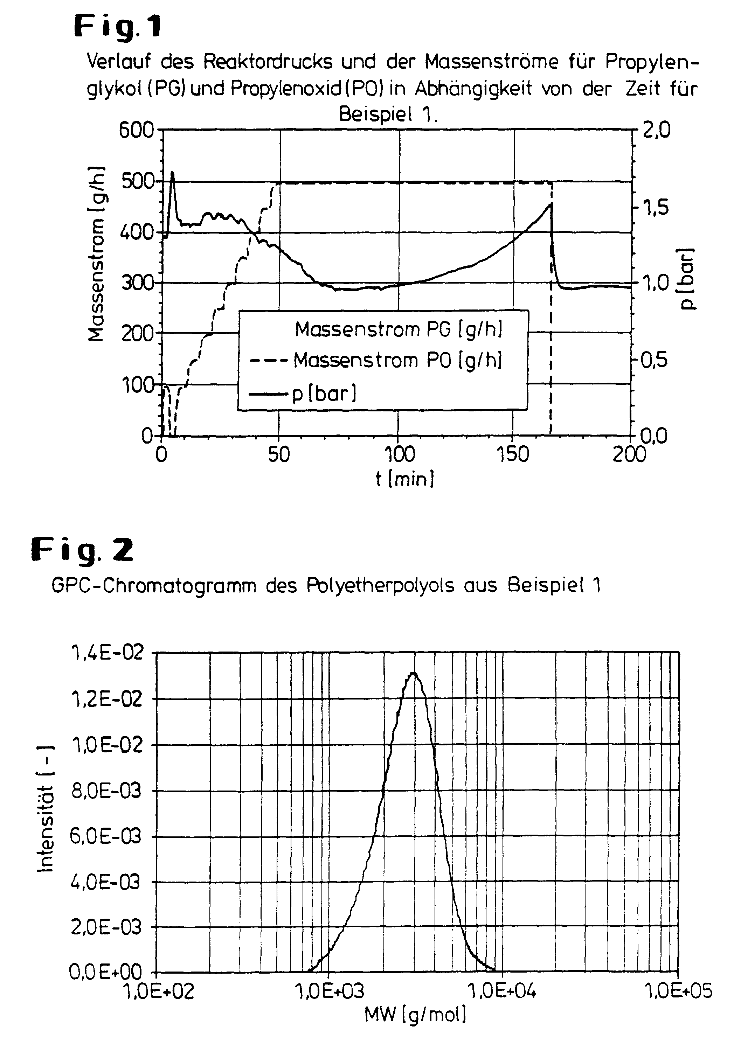

In einem Stahlreaktor mit einem Volumen von 2 Litern wurden 59 g Xylol und 0,036 g eines Doppelmetallcyanid(DMC)-Katalysators (hergestellt gemäß Deutscher Patentanmeldung 199 05 611, Beispiel A) vorgelegt Nachdem die Reaktionstemperatur von 150°C erreicht war, wurden 4,78 g Propylenoxid (7,5 Gew.-%, bezogen auf die Gesamtmenge an Xylol und Propylenoxid) hinzugegeben. Direkt nach der Abschaltung der Dosierung fiel der Druck von 1,75 bar auf einen Druck von 1,4 bar ab (Fig. 1). Anschließend wurden über einen Zeitraum von 2,5 Stunden 1,2 kg eines Gemisches aus Propylenoxid und Propylenglykol im Gewichtsverhältnis 96/4 (Molverhältnis 33/1) zur aktiven Katalysator-Suspension zugegeben. Das Suspensionsmittel und leichtflüchtige Anteile wurden anschließend durch Destillation bei 120°C/10 mbar entfernt.

Es wurde ein Polyetherpolyol mit einer OH-Zahl von 56 mg KOH/ g, einer Viskosität (25°C) von 359 mPas und einem Doppelbindungsgehalt von 5 mMol/kg erhalten. Das GPC-Chromatogramm zeigt eine sehr enge Molekulargewichtsverteilung ohne hochmolekularen Anteil (Fig. 2). Alle GPC-Messungen wurden bei 25°C mit THF als Laufmittel durchgeführt. Als Standard wurde Polystyrol mit Molekülmassen von 162 g/mol, 580 g/mol, 7002 g/mol, 10856 g/mol und 319894 g/mol eingesetzt.

### Beispiel 2

In einem Stahlreaktor mit einem Volumen von 2 Litern wurden 59 g Toluol und 0,036 g des Doppelmetallcyanid(DMC)-Katalysators aus Beispiel 1 vorgelegt. Nachdem die Reaktionstemperatur von 150°C erreicht war, wurden über einen Zeitraum von etwa 30 Sekunden 4,78 g Propylenoxid (7,5 Gew.-%, bezogen auf die Gesamtmenge an Toluol und Propylenoxid) hinzugegeben. Ohne die Propylenoxid-Dosierung zu unterbrechen, wurde zu diesem Zeitpunkt mit der Propylenglykol-Dosierung (Gewichtsverhältnis Propylenoxid/Propylenglykol = 96/4) begonnen. Nach 2,5 Stunden waren 1,2 kg des Gemisches aus Propylenoxid und Propylenglykol im Gewichtsverhältnis 96/4 (Molverhältnis 33/1) vollständig zugegeben. Das Suspensionsmittel und leichtflüchtige Anteile wurden anschließend durch Destillation bei 120°C/10 mbar entfernt.

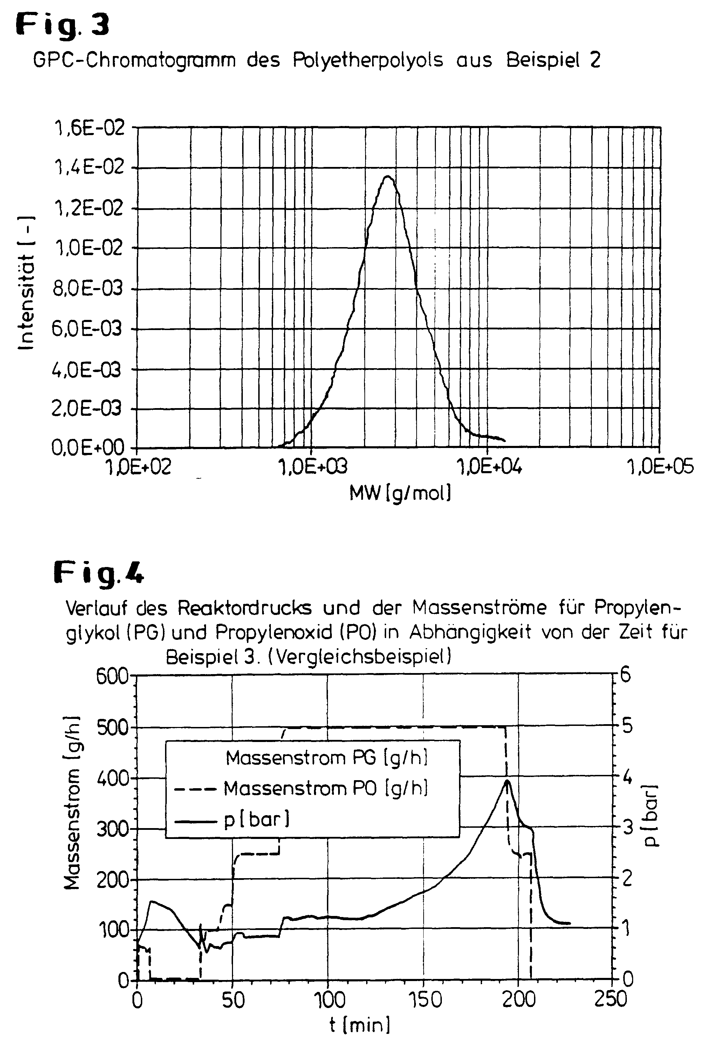

Es wurde ein Polyetherpolyol mit einer OH-Zahl von 56 mg KOH/g, einer Viskosität (25°C) von 352 mPas und einem Doppelbindungsgehalt von 5 mMol/kg erhalten. Das GPC-Chromatogramm zeigt eine sehr enge Molekulargewichtsverteilung ohne hochmolekularen Anteil (Fig. 3).

### Beispiel 3 (Vergleichsbeispiel analog EP-A 879 259)

In einem Stahlreaktor mit einem Volumen von 2 Litern wurden 59 g eines Polyoxypropylendiols mit einem mittleren Molekulargewicht von 2000 g/mol (OH-Zahl 56 mg KOH/g), das über DMC-Katalyse hergestellt wurde, und 0,036 g des Doppelmetallcyanid(DMC)-Katalysators aus Beispiel 1 vorgelegt. Zur Aktivierung des Katalysators wurden bei 150°C 4,8 g eines Gemisches aus Propylenoxid und Propylenglykol im Gewichtsverhältnis von 96:4 (Molverhältnis 33/1) hinzugegeben. Nach 27 Minuten war der für die Aktivierung des Katalysators typische Druckabfall am Ende der Induktionsphase zu beobachten (Fig 4). Anschließend wurden 1,2 kg eines Gemisches aus Propylenglykol und Propylenoxid im Verhältnis 96:4 über einen Zeitraum von 2,5 Stunden hinzugegeben. Die leichtflüchtigen Anteile wurden anschließend durch Destillation bei 120°C/ 10 mbar entfernt.

Der Doppelbindungsgehalt betrug 5 mMol/kg bei einer OH-Zahl von 56,4 mg KOH/g. Die Viskosität betrug bei 25°C 381 mPas.

### Beispiel 4 (Vergleichsbeispiel) Aktivierung mit mehr als 30 Gew.% Propylenoxid, bezogen auf die Gesamtmenge an Toluol und Propylenoxid

In einem Stahlreaktor mit einem Volumen von 2 Litern wurden 42 g Toluol und 0,036 g des Doppelmetallcyanid(DMC)-Katalysators aus Beispiel 1 vorgelegt. Zur Aktivierung des Katalysators wurden bei 105°C 36 g Propylenoxid (46 Gew.-%, bezogen auf die Gesamtmenge an Toluol und Propylenoxid) hinzugegeben. Nach ca. 5 Minuten war der für die Aktivierung des DMC-Katalysators typische Druckabfall im Reaktor zu beobachten. Anschließend wurden 1,2 kg eines Gemisches aus Propylenoxid und Propylenglykol im Gewichtsverhältnis 96/4 (Molverhältnis 33/1) über einen Zeitraum von 4 Stunden hinzugegeben. Das Suspensionsmittel und leichtflüchtige Anteile wurden anschließend durch Destillation bei 120°C/10 mbar entfernt.

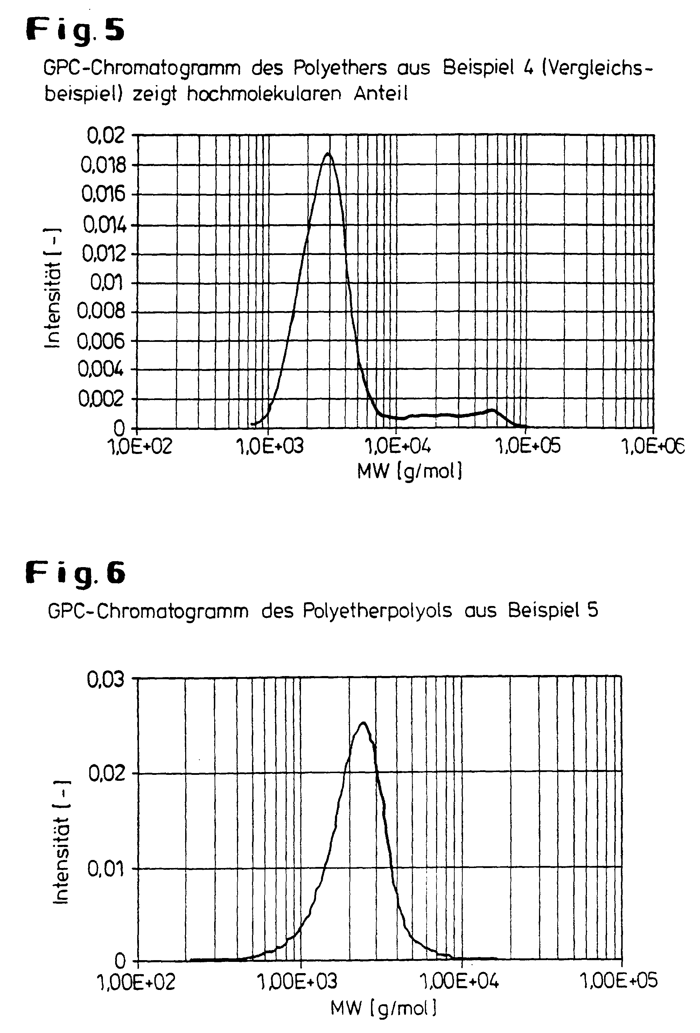

Es wurde ein Polyetherpolyol mit einer OH-Zahl von 53,3 mg KOH/g, einer Viskosität (25°C) von 852 mPas und einem Doppelbindungsgehalt von 5 mMol/kg erhalten. Die GPC-Analyse zeigt, dass sich hochmolekulare Ketten mit einem Molekulargewicht im Bereich von >10⁴ g/mol gebildet haben, die für diesen deutlichen Viskositätsanstieg verantwortlich sind (Fig. 5).

### Beispiel 5

In einem Stahlreaktor mit einem Volumen von 2 Litern wurden 59 g Toluol und 0,036 g des Doppelmetallcyanid(DMC)-Katalysators aus Beispiel 1 vorgelegt. Nachdem die Reaktionstemperatur von 150°C erreicht war, wurden 9,6 g Propylenoxid (15 Gew.-%, bezogen auf die Gesamtmenge an Toluol und Propylenoxid) hinzugegeben. Direkt nach der Abschaltung der Dosierung war ein Druckabfall zu beobachten, der die Aktivierung des Katalysators anzeigte. Anschließend wurde über einen Zeitraum von 2,5 Stunden 1,2 kg eines Gemisches aus Propylenoxid und Propylenglykol im Gewichtsverhältnis 96/4 (Molverhältnis 33/1) zur aktiven Katalysator-Suspension zugegeben. Das Suspensionsmittel und leichtflüchtige Anteile wurden anschließend durch Destillation bei 120°C/10 mbar entfernt.

Es wurde ein Polyetherpolyol mit einer OH-Zahl von 56 mg KOH/g, einer Viskosität (25°C) von 362 mPas und einem Doppelbindungsgehalt von 5 mMol/kg erhalten. Das GPC-Chromatogramm zeigt eine sehr enge Moleklargewichtsverteilung ohne hochmolekularen Anteil (Fig. 6).

## Patentansprüche

1. Verfahren zur Herstellung eines Polyetherpolyols durch Polyaddition von Alkylenoxiden an aktive Wasserstoffatome aufweisende Starterverbindungen mittels DMC-Katalyse, **dadurch gekennzeichnet, dass** der DMC-Katalysator in einem inerten Suspensionsmittel vorgelegt und mit 1-30 Gew.-% Alkylenoxid, bezogen auf die Gesamtmenge an Suspensionsmittel und Alkylenoxid, bei Temperaturen zwischen 20°C und 200°C aktiviert wird und anschließend durch Dosierung eines Starter/Alkylenoxid-Gemisches das Polyetherpolyol aufgebaut wird.

2. Verfahren nach Anspruch 1, bei dem als Suspensionsmittel ein polar-aprotisches, schwach polar-aprotisches oder unpolar-aprotisches Lösungsmittel eingesetzt wird.

3. Verfahren nach Anspruch 2, bei dem als Suspensionsmittel alkylierte oder chlorierte aromatische Verbindungen eingesetzt werden.

4. Verfahren nach einem der Ansprüche 1 bis 3, bei dem als Alkylenoxid zur Aktivierung des DMC-Katalysators Propylenoxid oder eine Mischung aus Propylenoxid und Ethylenoxid eingesetzt wird.

5. Verfahren nach einem der Ansprüche 1 bis 4, bei dem der DMC-Katalysator bei Temperaturen zwischen 120°C und 160°C aktiviert wird.

6. Verfahren nach einem der Ansprüche 1 bis 5, bei dem der DMC-Katalysator eine Gallensäure oder deren Salze, Ester oder Amide enthält.

7. Verfahren nach einem der Ansprüche 1 bis 6, bei dem als Starterverbindung mit aktiven Wasserstoffatomen Ethylenglykol, Diethylenglykol, Triethylenglykol, 1,2-Propylenglykol, 1,4-Butandiol, 1,6-Hexandiol, Bisphenol-A, Trimethylolpropan, Glycerin, Pentaerythrit, Sorbit, Rohrzucker, Wasser oder ein vorverlängerter Starter, der aus den zuvor genannten Verbindungen durch Alkoxylierung erhalten wurde, eingesetzt wird.

## Claims

1. A process for the production of a polyether polyol by polyaddition of alkylene oxides onto starter compounds having active hydrogen atoms by means of double metal cyanide (DMC) catalysis, **characterised in that** the DMC catalyst is initially present in an inert suspending agent and is activated with 1-30 wt.% alkylene oxide, relative to the total quantity of suspending agent and alkylene oxide, at temperatures of between 20°C and 200°C and the polyether polyol is then synthesised by the addition of a starter compound/alkylene oxide mixture.

2. A process according to claim 1, in which a polar-aprotic, weakly polar-aprotic or non-polar-aprotic solvent is used as the suspending agent.

3. A process according to claim 2, in which alkylated or chlorinated aromatic compounds are used as the suspending agent.

4. A process according to any one of claims 1 to 3, in which propylene oxide or a mixture of propylene oxide and ethylene oxide is used as the alkylene oxide for activating the DMC catalyst.

5. A process according to any one of claims 1 to 4, in which the DMC catalyst is activated at temperatures of between 120°C and 160°C.

6. A process according to any one of claims 1 to 5, in which the DMC catalyst contains a bile acid or the salts, esters or amides thereof.

7. A process according to any one of claims 1 to 6, in which ethylene glycol, diethylene glycol, triethylene glycol, 1,2-propylene glycol, 1,4-butanediol, 1,6-hexanediol, bisphenol A, trimethylolpropane, glycerol, pentaerythritol, sorbitol, cane sugar, water or a pre-extended starter compound obtained by alkoxylation from the above-mentioned compounds is used as the starter compound compound having active hydrogen atoms.

## Revendications

1. Procédé de fabrication d'un polyéther polyol par polyaddition à l'aide de catalyse DMC d'oxydes d'alkylène sur des composés de départ présentant des atomes d'hydrogène actifs, **caractérisé en ce que** le catalyseur DMC est placé dans un milieu de suspension inerte et est activé avec 1-30 % en poids d'oxyde d'alkylène, rapportés à la quantité totale de milieu de suspension et d'oxyde d'alkylène, à des températures entre 20°C et 200°C et **en ce que** le polyéther polyol est ensuite élaboré par dosage d'un mélange composé de départ/oxyde d'alkylène.

2. Procédé suivant la revendication 1, pour lequel on utilise comme milieu de suspension un solvant aprotique polaire, aprotique faiblement polaire ou aprotique non polaire.

3. Procédé suivant la revendication 2, pour lequel on utilise comme milieu de suspension des composés aromatiques alkylés ou chlorés.

4. Procédé suivant l'une des revendications 1 à 3, pour lequel on utilise comme oxyde d'alkylène pour l'activation du catalyseur DMC de l'oxyde de propylène ou un mélange d'oxyde de propylène et d'oxyde d'éthylène.

5. Procédé suivant l'une des revendications 1 à 4, pour lequel le catalyseur DMC est activé à des températures entre 120°C et 160°C.

6. Procédé suivant l'une des revendications 1 à 5, pour lequel le catalyseur DMC contient un acide biliaire ou ses sels, esters ou amides.

7. Procédé suivant l'une des revendications 1 à 6, pour lequel on utilise comme composé de départ avec des atomes d'hydrogène actifs l'éthylène glycol, le diéthylène glycol, le triéthylène glycol, le 1,2-propylène glycol, le 1,4-butanediol, le 1,6-hexanediol, le bisphénol-A, le triméthylolpropane, la glycérine, le pentaérythrite, le sorbitol, le sucre de canne, l'eau ou un composé de départ préalablement allongé, qui a été obtenu par alkoxylation à partir des composés précités.
